# EUROPÄISCHE PATENTSCHRIFT

(11) **EP 1 175 606 B1**
(45) Veröffentlichungstag und Bekanntmachung des Hinweises auf die Patenterteilung: **03.12.2003**
(21) Anmeldenummer: 00938492.6
(22) Anmeldetag: 19.04.2000
(51) Int. Cl.: G01L 9/04, G01L 19/14, G01L 9/00

(54) **DRUCKMESSGERÄT FÜR FAHRZEUGBREMSSYSTEME**
BRAKING DEVICE FOR VEHICLE BRAKING SYSTEMS
APPAREIL DE FREINAGE DESTINE A DES SYSTEMES DE FREINAGE DE VEHICULES

(30) Priorität: 21.04.1999 DE 19917941
(43) Veröffentlichungstag der Anmeldung: 30.01.2002
(73) Patentinhaber: ROBERT BOSCH GMBH, 70442 Stuttgart (DE)
(72) Erfinder: KAISER, Harry, D-71706 Markgroeningen (DE); DOERING, Sven, D-71254 Ditzingen (DE)
(86) Internationale Anmeldenummer: DE0001233
(87) Internationale Veröffentlichungsnummer: WO00063665

(56) Entgegenhaltungen:
- DE-A- 4 342 665
- DE-A- 19 711 366
- US-A- 4 536 820

## Beschreibung

### Stand der Technik

Die Erfindung geht aus von einem Bremsgerät für Fahrzeugbremssysteme der im Oberbegriff des Anspruchs 1 definierten Gattung.

Solche Bremsgeräte werden bei elektrohydraulischen Bremssystemen mit Blockierschutz oder Bremssystemen ohne mechanische Kopplung zwischen dem Bremsbetätigungspedal und dem Hauptbremszylinder eingesetzt. Die Hauptkenngrößen zur Regelung dieser elektrischen Bremssysteme bilden die in den Bremskreisen auftretenden Betriebsdrücke, die von Drucksensoren des Bremsgeräts erfaßt und in elektrische Meßwerte umgewandelt werden. Die Steuerelektronik wertet die Meßwerte zusammen mit anderen Sensorsignalen aus und generiert entsprechende Ansteuerungssignale für das Bremsaggregat.

Bei einem bekannten Bremsgerät (DE 197 11 366 A1) sind mehrere Drucksensoren über einen Schaltungsträger mit einer auf einer Leiterplatte befestigten Steckeranordnung verbunden. Die elektrische Verbindung zu der Steuerelektronik wird über einen an einem zur Steuerelektronik führenden Verbindungskabel angeschlossenen Stecker hergestellt, der auf die Steckeranordnung aufgesteckt werden muß.

Bei einem anderen bekannten, druckführenden Gerät (US 4,536,820 A) der eingangs genannten Art sind ein Drucksensor zur Druckmessung sowie eine mit Abstand zu diesem angeordnete Steuerelektronik mit einander gegenüberliegenden Kontaktflächen vorgesehen. Eine elektrische Verbindung zwischen dem Drucksensor und der Steuerelektronik ist mittels Federkontaktstiften hergestellt. Zu diesem Zweck durchgreifen Hülsen der Federkontaktstifte einen zwischen dem Drucksensor und der Steuerelektronik angeordneten Distanzkörper. Die Hülsen sind druckdicht und elektrisch isolierend und verschieblich mit dem Distanzkörper verbunden. Während die Federkontaktstifte mit Federkraft stirnseitig an den Kontaktflächen des Drucksensors abgestützt sind, greifen an den Kontaktflächen der Steuerelektronik angeordnete Federkontakte an den Hülsen der Federkontaktstifte an. Der Drucksensor, der Distanzkörper mit den Federkontaktstiften und die Steuerelektronik sind von einem am druckführenden Gerät befestigten Gehäuse übergriffen.

Die Montage dieser Bauteile ist relativ aufwendig: Zuerst ist der Drucksensor druckdicht und unverschieblich mit dem druckführenden Gerät zu verbinden. Dann ist der Distanzkörper mit den darin befestigten Hülsen der Federkontaktstifte am druckführenden Gerät zu montieren. Anschließend wird das Gehäuse mit dem druckführenden Gerät verbunden. Schließlich ist die Steuerelektronik in dem Gehäuse zu montieren. Eine automatische Bestückung des druckführenden Geräts ist daher schwerlich möglich.

### Vorteile der Erfindung

Das erfindungsgemäße Bremsgerät mit den Merkmalen des Anspruchs 1 hat den Vorteil, daß die Federkontaktstifte in einer vormontierten, den Drucksensor enthaltenden Baueinheit angeordnet sind, so daß die Endmontage schnell und unproblematisch durchgeführt werden kann.

Durch die in den weiteren Ansprüchen aufgeführten Maßnahmen sind vorteilhafte Weiterbildungen und Verbesserungen des im Anspruch 1 angegebenen Bremsgeräts möglich.

Gemäß einer vorteilhaften Ausführungsform der Erfindung weisen die Federkontaktstifte eine Hülse mit einliegender Schraubendruckfeder und mindestens einen in der Hülse axial verschieblichen Stift auf, der von der Druckfeder in Ausschieberichtung aus der Hülse beaufschlagt ist. Die Federkontaktstifte können dabei unterschiedlich ausgeführt werden. In einer einfachen Ausführung bilden der Kontaktstift einerseits und das ganz oder teilweise geschlossene eine Ende der Hülse andererseits die an den Kontaktflächen von Drucksensor und Steuerelektronik anliegenden Kontaktteile. Die Druckfeder stützt sich zwischen dem Stift und dem Hülsenende ab. In einer anderen Ausführungsform sind zwei Stifte vorgesehen, die jeweils an einem Hülsenende aus der Hülse vorstehen. Die in der Hülse aufgenommene Schraubendruckfeder stützt sich zwischen den beiden Stiften ab und drückt den einen Stift auf eine Kontaktfläche der Steuerelektronik auf. In allen Fällen ist an jedem Stift ein Anschlag ausgebildet, der mit jeweils einem in der Hülse vorhandenen Gegenanschlag zusammenwirkt, so daß der Stift bei fehlendem Gegendruck vor Endmontage nicht aus der Hülse ausgeschoben werden kann.

Gemäß einer bevorzugten Ausführungsform der Erfindung weist der Drucksensor eine topfförmige Meßzelle und einen die Meßzelle aufnehmenden Flansch auf, der mit einem zentralen Vorsprung in die Meßzelle und mit einem zentralen Zapfen in eine in einem Hydraulikblock ausgebildete Bohrung hineinragt und mit einer Vorsprung und Zapfen durchsetzenden, zentralen Durchgangsbohrung versehen ist. Durch den in die Meßzelle hineinragenden Vorsprung ist deren Hohlraum auf ein notwendiges Minimum reduziert, was gewährleistet, daß sich im Meßspalt keine größeren Restluftanteile absondern können, die die Druckmessung verfälschen. Der Flansch ist als einfaches Drehteil leicht herstellbar und sorgt für die Verbindung der Meßzelle zum Innern des Hydraulikblocks, wobei er gemäß einer weiteren Ausführungsform der Erfindung nach Einlegen einer Dichtung in einen am Zapfen ausgebildeten Einstich im Hydraulikblock verstemmt wird. Die topfförmige Meßzelle wird an ihrem auf dem Flansch aufliegenden Topfrand mit dem Flansch verschweißt. Sowohl das Verstemmen als auch das Schweißen ist im Automationsprozeß einfach und kostengünstig durchführbar.

.Die elektrische Verbindung des Drucksensors zu den von den Federkontaktstiften beaufschlagten sensorseitigen Kontaktflächen erfolgt gemäß vorteilhafter Ausführungsformen der Erfindung über Goldbonddrähte zu einem den Drucksensor umschließenden, umspritzten Stanzgitter, auf dem eine Leiterplatte angeordnet ist, die ihrerseits die Kontaktflächen trägt. Die Leiterplatte ist auf dem Stanzgitter aufgelötet, und das Stanzgitter erhält Massekontakt durch mindestens einen am Stanzgitter einstückig ausgebildeten gabelförmigen Flachstecker, der in eine im Flansch koaxial eingearbeitete Ringnut hineinragt und dort die Nutflanken und/oder den Nutboden kontaktiert. Das umspritzte Stanzgitter ist stirnseitig in der Ringnut aufgenommen und durch Einstemmen eines Nutrands am Flansch festgelegt.

Gemäß einer vorteilhaften Ausführungsform der Erfindung weist die Steuerelektronik eine Elektronikbox, die an dem vom Drucksensor abgekehrten Stirnende des Gehäuses angeordnet ist, und ein davor im Gehäuse gehaltenes Stanzgitter auf, das die der Steuereinheit zugeordneten Kontaktflächen auf ihrer von der Elektronikbox abgekehrten Unterseite trägt.

### Zeichnung

Die Erfindung ist anhand eines in der Zeichnung dargestellten Ausführungsbeispiels in der nachfolgenden Beschreibung näher erläutert. Es zeigen:
- Fig. 1: einen Längsschnitt eines Bremsgeräts für ein Fahrzeugbremssystem,
- Fig. 2: eine perspektivische Darstellung einer vormontierten Unterbaugruppe des Bremsgeräts mit Drucksensor und Federkontaktstiften, teilweise aufgeschnitten,
- Fig. 3: eine perspektivische Darstellung eines Stanzgitters der Unterbaugruppe in Fig. 2.
- Fig. 4: eine perspektivische Darstellung des umspritzten Stanzgitters gemäß Fig. 3,
- Fig. 5: eine perspektivische Darstellung des Drucksensors mit umspritztem Stanzgitter und Leiterplatte in der Unterbaugruppe gemäß Fig. 2,
- Fig. 6 bis 8: jeweils einen Längsschnitt eines Kontaktfederstiftes gemäß weiterer Ausführungsbeispiele.

### Beschreibung des Ausführungsbeispiels

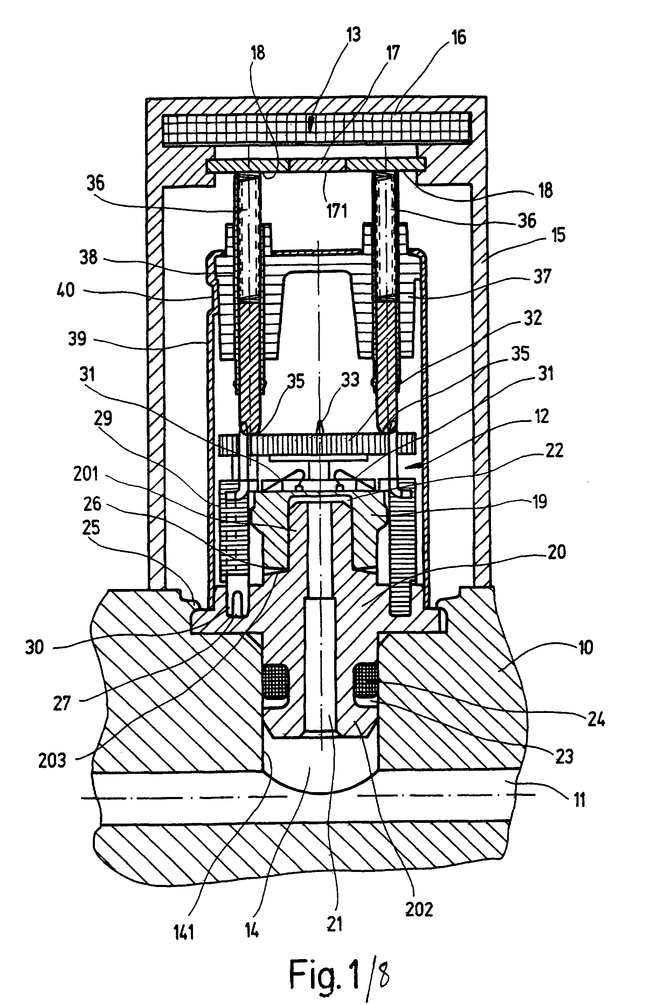

Das in Fig. 1 im Längsschnitt dargestellte Bremsgerät für ein Fahrzeugbremssystem ist an einem sog. Hydraulikblock 10 befestigt, in dem mit den Bremskreisen verbundene Hydraulikkanäle 11 verlaufen. Das Bremsgerät weist einen den Hydraulikdruck im Hydraulikkanal 11 messenden Drucksensor 12 sowie eine Steuerelektronik 13 zur Meßwertauswertung und Steuersignalgenerierung auf. Der Drucksensor 12 ist in eine im Hydraulikkanal 11 mündende, in den Hydraulikblock 10 eingebrachte Bohrung 14 flüssigkeitsdicht eingesetzt, während die Steuerelektronik 13 in einem über den Drucksensor 12 gestülpten und mit seinem offenen Stirnrand auf den Hydraulikblock 10 aufgesetzten und dort befestigten domartigen Gehäuse 15 untergebracht ist. Die Steuerelektronik 13 ist dabei in einer Elektronikbox 16 aufgenommen und mit einem davor im Gehäuse 15 gehaltenen Stanzgitter 17 elektrisch verbunden, das auf seiner von der Elektronikbox 16 abgekehrten Unterseite 171 insgesamt vier Kontaktflächen 18 für die elektrische Verbindung zum Drucksensor 12 trägt.

Der Drucksensor 12 weist eine tassen- oder topfförmige Meßzelle 19 und einen die Meßzelle 19 aufnehmenden Flansch 20 auf, der mit einem zentralen Vorsprung 201 in die Meßzelle 19 und mit einem zentralen Zapfen 202 in die im Hydraulilkblock 10 ausgebildete Bohrung 14 hineinragt sowie mit einer Durchgangsbohrung 21 versehen ist, die den zentralen Vorsprung 201 und den Zapfen 202 durchdringt, so daß der zwischen der Stirnseite des zentralen Vorsprungs 201 und dem Topfboden der Meßzelle 19 verbleibende Meßspalt 22, dessen Volumen durch den zentralen Vorsprung 201 auf ein notwendiges Minimum begrenzt ist, mit dem Hydraulikkanal 11 im Hydraulikblock 10 in Verbindung steht. Der Zapfen 202 trägt einen Einstich 23, in dem ein an die Bohrungswand 141 der Bohrung 14 sich andrückender Dichtungsring 24, vorzugsweise O-Ring, einliegt. Nach Einstecken des Zapfens 202 in die Bohrung 14 wird der Flansch 20 am Hydraulikblock 10 verstemmt. Die Verstemmung ist in Fig. 1 mit 25 gekennzeichnet. Die auf dem zentralen Vorsprung 201 aufsetzende topfförmige Meßzelle 19 ist mit ihrem Topfrand auf einer am Flansch 20 ausgebildeten Ringschulter 203 aufgesetzt und dort mittels einer umlaufenden Schweißnaht 26 befestigt. Der Topfrand der Meßzelle 19 ist dabei ohne Fase ausgeführt und dadurch besonderes einfach und präzise zu verschweißen.

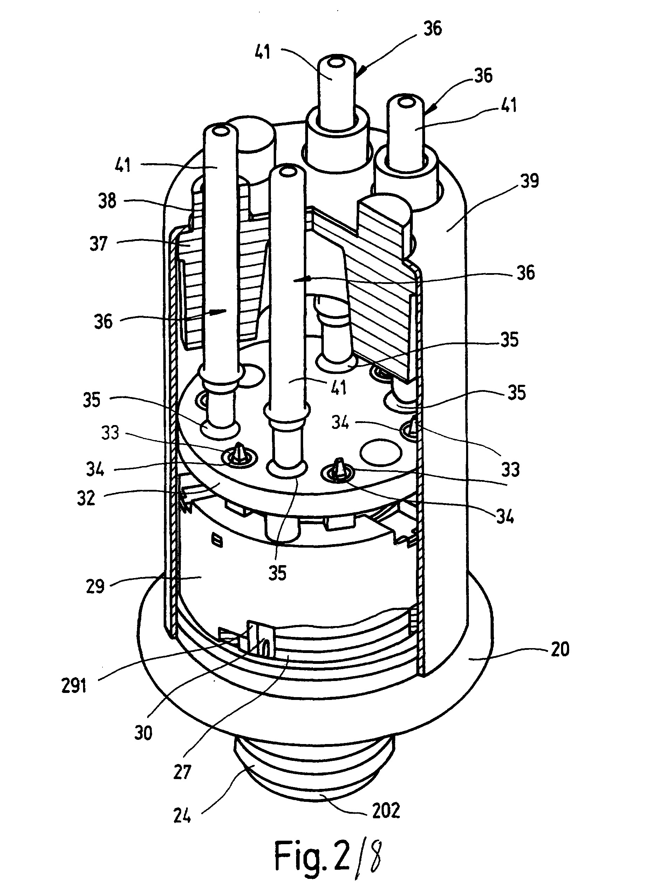

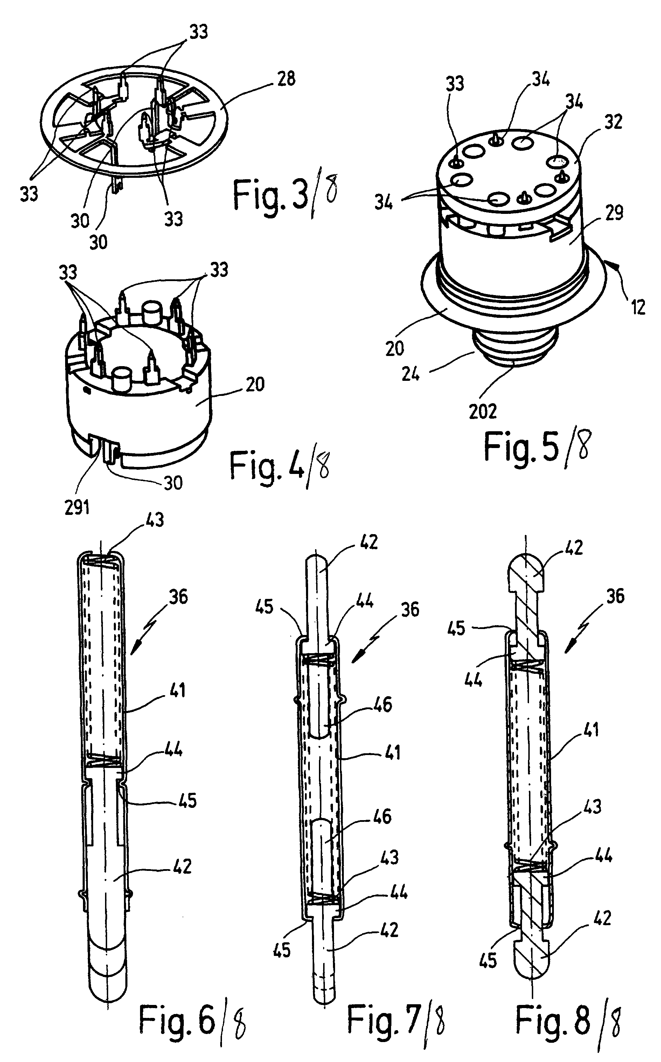

Koaxial zum zentralen Vorsprung 201, Zapfen 202 und zur Ringschulter 203 ist eine Ringnut 27 im Flansch 20 ausgebildet, in die ein die Meßzelle 19 koaxial umschließendes Stanzgitter 28 mit Umspritzung 29 aus einem elektrisch isolierenden Material eingesetzt ist. Das Stanzgitter 28 ist in Fig. 3 und das mit der Umspritzung 29 versehene Stanzgitter in Fig. 4 einzeln perspektivisch dargestellt. Wie Fig. 3 zeigt, sind aus dem Stanzgitter 28 zwei Flachsteckerzungen 30 rechtwinklig nach unten ausgebogen, die im Endbereich innerhalb einer Aussparung 291 (Fig. 2 und 4) der Umspritzung 29 freiliegen und mit Einsetzen des umspritzten Stanzgitters 28,29 zur Herstellung eines Massekontakts zum Stanzgitter 28 die Nutflanken und/oder den Nutboden der Ringnut 27 kontaktieren. Nach Einsetzen des umspritzten Stanzgitters 28,29 wird dieses durch Einstemmen der äußeren Nutflanke in der Ringnut 27 mechanisch unverlierbar festgelegt. Die Meßzelle 19 ist über Goldbonddrähte 31 mit dem Stanzgitter 28 elektrisch verbunden.

Auf dem vom Flansch 20 abgekehrten Stirnende des Stanzgitters 28 ist eine bestückte Leiterplatte 32 aufgesetzt (Fig. 2 und 5) und elektrisch und mechanisch mit dem Stanzgitter 28 verbunden. Hierzu ist das Stanzgitter 28 mit nach oben abstehenden Aufnahmedornen 33 (Fig. 3 und 4) versehen, die durch Öffnungen 34 in der Leiterplatte 32 gesteckt und in den Öffnungen 34 verlötet sind. Die sich somit ergebende Baueinheit aus Flansch 20, Meßzelle 19, Stanzgitter 28 mit Umspritzung 29 und Leiterplatte 32 ist in Fig. 2 und 5 perspektivisch dargestellt. Auf der vom umspritzten Stanzgitter 28,29 abgekehrten Oberseite der Leiterplatte 32 sind insgesamt vier Kontaktflächen 35 für die elektrische Verbindung zur Steuerelektronik 13 aufgebracht.

Die elektrische Verbindung zwischen dem Drucksensor 12 und der Steuerelektronik 13 ist durch ingesamt vier Federkontaktstifte 36 (Fig. 1 und 2) hergestellt, die in in einem Isolierstück 37 ausgebildeten Führungen 38 eingesteckt sind. Das Isolierstück 37 ist in einer Kapsel 39 aufgenommen, die den Drucksensor 12, einschließlich dem umspritzten Stanzgitter 28,29 und der Leiterplatte 32, koaxial umschließt und auf dem Flansch 20 durch einige Schweißpunkte befestigt ist. Drucksensor 12 mit Kapsel 39 und den aus der Kapsel 39 hervorstehenden Federkontaktstiften 36 bilden eine komplett vormontierte Unterbaugruppe des Bremsgeräts, wie sie in Fig. 2 perspektivisch dargestellt ist.

Jeder Federkontaktstift 36 besteht aus einer Hülse 41, einem in der Hülse 41 axial verschieblichen Kontaktstift 42 und einer in der Hülse 41 einliegenden Schraubendruckfeder 43, die sich mit ihrem einen Federende an dem Kontaktstift 42 und mit ihrem anderen Federende an dem ganz oder teilweise geschlossenen Ende der Hülse 41 abstützt. Wie in der vergrößerten Darstellung in Fig. 6 zu sehen ist, ist am Kontaktstift 42 ein Anschlag 44 ausgebildet, der zur Begrenzung des Verschiebewegs des Kontaktstiftes 42 mit einem Gegenanschlag 45 in der Hülse 41 zusammenwirkt und so ein Herausgleiten des von außen unbelasteten Kontaktstiftes 42 aus der Hülse 41 verhindert.

Zur Montage des Bremsgeräts wird die vormontierte Unterbaugruppe gemäß Fig. 2 in die Bohrung 14 im Hydraulikblock 10 eingesteckt und im Hydraulikblock 10 am Flansch 20 verstemmt. Danach wird das mit der Elektronikbox 16 und dem Stanzgitter 17 bestückte Gehäuse 15 über die Unterbäugruppe gemäß Fig. 2 geschoben, wobei die am Stanzgitter 17 ausgebildeten Kontaktflächen 18 sich auf die Stirnenden der Hülsen 41 der Federkontaktstifte 36 auflegen. Unter Zusammenpressen der Schraubendruckfedern 43 in den vier Federkontaktstiften 36 wird nunmehr das Gehäuse 15 soweit über die Unterbaugruppe gemäß Fig. 2 geschoben, bis der Topfrand des Gehäuses 15 auf dem Hydraulikblock 10 aufstößt. Nunmehr wird das Gehäuse 15 am Hydraulilkblock 10 befestigt, was - wie weiter nicht dargestellt ist - durch Verschrauben, Verschweißen, Verstemmen oder ähnliches erfolgen kann. Bei der Endmontage des Bremsgeräts wird mit Überstülpen des Gehäuses 15 über die Unterbaugruppe aus Drucksensor 12 und Kapsel 39 mit Federkontaktstiften 36 die Kontaktierung zwischen Drucksensor 12 und Steuerelektronik 13 automatisch hergestellt, ohne daß dies besonderer Steckvorgänge bedarf.

In Fig. 7 und 8 sind noch zwei verschiedene Ausführungsbeispiele für die Ausbildung der Federkontaktstifte 36 dargestellt. In beiden Ausführungsbeispielen weist der Federkontaktstift 36 zwei Kontaktstifte 42 auf, die in der Hülse 41 verschieblich geführt sind und an beiden Hülsenenden vorstehen. Zwischen den beiden Kontaktstiften 42 stützt sich die Schraubendruckfeder 43 ab. An jedem Kontaktstift 42 ist wiederum ein Anschlag 44 ausgebildet, der mit einem Gegenanschlag 45 in der Hülse 41 zusammenwirkt. Im Ausführungsbeispiel der Fig. 7 trägt jeder Kontaktstift 42 einen Führungsdorn 46, der von der Schraubendruckfeder 43 übergriffen wird. Im Ausführungsbeispiel der Fig. 8 ist auf einen solchen Führungsdorn 46 verzichtet und die Schraubendruckfeder in der Hülse 41 geführt.

Die Erfindung ist nicht auf das beschriebene Ausführungsbeispiel beschränkt. So können in dem Hydraulikblock mehrere Drucksensoren 12 nebeneinander angeordnet sein, wobei jeder Drucksensor 12 den Druck in einem von im Hydraulikblock 10 ausgebildeten parallelen Hydraulikkanälen 11 erfaßt. Jeder Drucksensor ist zusammen mit dem umspritzten Stanzgitter 28,29, der Leiterplatte 27 und dem Isolierstück 37 mit Federkontaktstiften 36 durch die Kapsel 39 zu der vormontierten Unterbaugruppe gemäß Fig. 2 zusammengefaßt. Nach Einsetzen der einzelnen Unterbaugruppen in die entsprechenden Bohrungen 14 im Hydraulikblock 10 wird ein gemeinsames Gehäuse 15, welches die Steuerelektronik 13 und eine der Zahl der Drucksensoren 12 entsprechende Anzahl von Stanzgittern 17 mit entsprechenden Kontaktflächen 18 enthält, über alle Unterbaugruppen gestülpt und am Hydraulikblock 10 befestigt. Die Stanzgitter können auch zu einem einzigen Stanzgitter zusammengefaßt werden.

## Patentansprüche

1. Bremsgerät für Fahrzeugbremssysteme mit mindestens einem Drucksensor (12) zur Bremsdruckmessung und mit einer Steuerelektronik (13) zur Meßwertauswertung und Steuersignalgenerierung, welche in einem über den mindestens einen Drucksensor gestülpten Gehäuse (15) untergebracht ist, wobei die elektrische Verbindung zwischen Drucksensor (12) und Steuerelektronik (13) mittels Federkontaktstiften (36) hergestellt ist, die sich mit Federkraft stirnseitig auf einander gegenüberliegenden, dem Drucksensor (12) und der Steuerelektronik (13) zugeordneten Kontaktflächen (35, 18) abstützen, **dadurch gekennzeichnet, daß** die Federkontaktstifte (36) in in einem Isolierstück (37) ausgebildeten Führungen (38) eingesteckt sind und daß das Isolierstück (37) in einer den Drucksensor (12) koaxial umschließenden Kapsel (39), vorzugsweise durch Verstemmen, festgesetzt ist, die ihrerseits an dem Drucksensor (12) befestigt ist.

2. Bremsgerät nach Anspruch 1, **dadurch gekennzeichnet, daß** die Federkontaktstifte (36) eine Hülse (41) mit einliegender Schraubendruckfeder (43) und mindestens einen in der Hülse (41) verschieblichen Stift (42) aufweisen, der von der Schraubendruckfeder (43) in Ausschieberichtung aus der Hülse (41) beaufschlagt ist.

3. Bremsgerät nach Anspruch 2, **dadurch gekennzeichnet, daß** an dem mindestens einen Stift (42) ein Anschlag (44) angeordnet ist, der zur Begrenzung des Verschiebewegs des mindestens einen Stiftes (42) mit einem in der Hülse (41) ausgebildeten Gegenanschlag (45) zusammenwirkt.

4. Bremsgerät nach einem der Ansprüche 1 - 3, **dadurch gekennzeichnet, daß** der Drucksensor (12) eine topfförmige Meßzelle (19) und einen die Meßzelle (19) aufnehmenden Flansch (20) aufweist, der mit einem zentralen Vorsprung (201) in die Meßzelle (19) und mit einem zentralen Zapfen (202) in eine in einem Hydraulikblock (10) ausgebildete Bohrung (14) hineinragt und mit einer Vorsprung (201) und Zapfen (202) durchsetzenden, zentralen Durchgangsbohrung (21) versehen ist.

5. Bremsgerät nach Anspruch 4, **dadurch gekennzeichnet, daß** der zentrale Zapfen (202) einen Einstich (23) trägt, in dem ein sich an die Bohrungswand (141) der Bohrung (14) andrückender Dichtungsring (24) einliegt, und daß der Flansch (20) am Hydraulikblock (10) befestigt, vorzugsweise verstemmt, ist.

6. Bremsgerät nach Anspruch 5, **dadurch gekennzeichnet, daß** die topfförmige Meßzelle (19) mit ihrem Topfrand auf einer am Flansch (20) ausgebildeten Ringschulter (203) aufliegt und dort verschweißt ist.

7. Bremsgerät nach Anspruch 5 oder 6, **dadurch gekennzeichnet, daß** im Flansch (20) eine zu Zapfen (202) und Vorsprung (201) koaxiale Ringnut (27) ausgebildet ist, in die ein die Meßzelle (19) koaxial umschließendes, umspritztes Stanzgitter (28, 29) eingesetzt ist.

8. Bremsgerät nach Anspruch 7, **dadurch gekennzeichnet, daß** das umspritzte Stanzgitter (28, 29) in der Ringnut (27), vorzugsweise durch Einstemmen des einen Nutrandes, befestigt ist.

9. Bremsgerät nach Anspruch 7 oder 8, **dadurch gekennzeichnet, daß** am Stanzgitter (28) mindestens eine Flachsteckerzunge (30) ausgebildet ist, die in die Ringnut (27) hineinragt und zur Herstellung eines Massekontakts zum Stanzgitter (28) die Nutflanken und/oder den Nutboden der Ringnut (27) kontaktiert.

10. Bremsgerät nach einem der Ansprüche 7 - 9, **dadurch gekennzeichnet, daß** die Meßzelle (19) über Goldbonddrähte (31) mit dem Stanzgitter (28) elektrisch leitend verbunden ist.

11. Bremsgerät nach einem der Ansprüche 7 -9, **dadurch gekennzeichnet, daß** auf dem vom Flansch (20) abgekehrten Stirnende des Stanzgitters (28) eine bestückte Leiterplatte (32) aufgesetzt und elektrisch und mechanisch mit dem Stanzgitter (28) verbunden ist.

12. Bremsgerät nach Anspruch 11, **dadurch gekennzeichnet, daß** das Stanzgitter (28) nach oben abstehende Aufnahmedorne (33) trägt, die durch Öffnungen (34) in der Leiterplatte (32) gesteckt und in den Öffnungen (34) verlötet sind.

13. Bremsgerät nach Anspruch 11 oder 12, **dadurch gekennzeichnet, daß** die von den Federkontaktstiften (36) kontaktierten, drucksensorseitigen Kontaktflächen (35) auf der vom Drucksensor (12) abgekehrten Oberseite der Leiterplatte (32) angeordnet sind.

14. Bremsgerät nach einem der Ansprüche 11 - 13, **dadurch gekennzeichnet, daß** die Kapsel (39) die Leiterplatte (32) und das umspritzte Stanzgitter (28, 29) koaxial umschließt und stirnseitig auf dem Flansch (20), vorzugsweise durch Punktschweißen, befestigt ist.

15. Bremsgerät nach Anspruch 13 oder 14, **dadurch gekennzeichnet, daß** die Steuerelektronik (13) in einer Elektronikbox (16) aufgenommen ist, die an dem vom Drucksensor (12) abgekehrten Stirnende des Gehäuses (15) angeordnet ist und ein davor im Gehäuse (15) gehaltenes Stanzgitter (17) aufweist und daß die der Steuerelektronik (13) zugeordneten Kontaktflächen (18) auf der von der Elektronikbox (16) abgekehrten Unterseite (171) des Stanzgitters (17) ausgebildet sind.

## Claims

1. Brake device for vehicle brake systems, having at least one pressure sensor (12) for measuring the brake pressure and having an electronic control unit (13) which is intended for evaluating the measured values and for generating control signals and is accommodated in a housing (15) put over the at least one pressure sensor, the electrical connection between pressure sensor (12) and electronic control unit (13) being produced by means of spring contact pins (36) which are supported with spring force at the end faces on contact surfaces (35, 18) which are opposite one another and are assigned to the pressure sensor (12) and the electronic control unit (13), **characterized in that** the spring contact pins (36) are inserted into guides (38) formed in an insulating piece (37), and **in that** the insulating piece (37) is secured, preferably by caulking, in a capsule (39) which coaxially encloses the pressure sensor (12) and is in turn fastened to the pressure sensor (12).

2. Brake device according to Claim 1, **characterized in that** the spring contact pins (36) have a sleeve (41) with enclosed helical compression spring (43) and at least one pin (42) which is displaceable in the sleeve (41) and is acted upon by the helical compression spring (43) in the push-out direction from the sleeve (41) .

3. Brake device according to Claim 2, **characterized in that** a stop (44) is arranged on the at least one pin (42), and this stop (44), for limiting the amount of travel of the at least one pin (42), interacts with a counterstop (45) formed in the sleeve (41).

4. Brake device according to one of Claims 1 to 3, **characterized in that** the pressure sensor (12) has a pot-shaped measuring cell (19) and a flange (20) which accommodates the measuring cell (19), projects with a central projection (201) into the measuring cell (19) and with a central peg (202) into a bore (14) formed in a hydraulic block (10) and is provided with a central through-bore (21) passing through a projection (201) and peg (202).

5. Brake device according to Claim 4, **characterized in that** the central peg (202) has a recess (23) in which a sealing ring (24) pressing against the bore wall (141) of the bore (14) rests, and **in that** the flange (20) is fastened, preferably caulked, to the hydraulic block (10).

6. Brake device according to Claim 5, **characterized in that** the pot-shaped measuring cell (19) rests with its pot margin on an annular shoulder (203) formed on the flange (20) and is welded there.

7. Brake device according to claim 5 or 6,
**characterized in that** an annular groove (27) which is coaxial to peg (202) and projection (201) is formed in the flange (20), into which annular groove (27) an encapsulated punched grid (28, 29) coaxially enclosing the measuring cell (19) is inserted.

8. Brake device according to Claim 7, **characterized in that** the encapsulated punched grid (28, 29) is fastened in the annular groove (27), preferably by caulking the one groove margin.

9. Brake device according to Claim 7 or 8, **characterized in that** at least one flat connector tab (30) is formed on the punched grid (28), this flat connector tab (30) projecting into the annular groove (27) and electrically bonding the groove flanks and/or the groove base of the annular groove (27) for producing an earthing contact with the punched grid (28).

10. Brake device according to one of Claims 7 to 9, **characterized in that** the measuring cell (19) is connected to the punched grid (28) in an electrically conductive manner via gold bonding wires (31).

11. Brake device according to one of Claims 7 to 9, **characterized in that** an assembled printed circuit board (32) is mounted on that front end of the punched grid (28) which faces away from the flange (20) and is electrically and mechanically connected to the punched grid (28).

12. Brake device according to Claim 11, **characterized in that** the punched grid (28) has upwardly projecting locating tongues (33) which are put through openings (34) in the printed circuit board (32) and are soldered in the openings (34).

13. Brake device according to Claim 11 or 12, **characterized in that** the pressure-sensor-side contact surfaces (35) electrically bonded by the spring contact pins (36) are arranged on the top side, facing away from the pressure sensor (12), of the printed circuit board (32).

14. Brake device according to one of Claims 11 to 13, **characterized in that** the capsule (39) coaxially encloses the printed circuit board (32) and the encapsulated punched grid (28, 29) and is fastened at the end face to the flange (20), preferably by spot welding.

15. Brake device according to Claim 13 or 14, **characterized in that** the electronic control unit (13) is accommodated in an electronic box (16) which is arranged at that front end of the housing (15) which faces away from the pressure sensor (12) and has a punched grid (17) held in front of it in the housing (15), and **in that** the contact surfaces (18) assigned to the electronic control unit (13) are formed on the underside (171), facing away from the electronic box (16), of the punched grid (17).

## Revendications

1. Appareil de freinage destiné à des systèmes de freinage de véhicules, doté d'au moins un capteur de pression (12) pour la mesure de pression de freinage et d'une électronique de commande (13) pour l'exploitation de la mesure et la génération d'un signal de commande, insérée dans un boîtier (15) retroussé au-dessus d'au moins un capteur de pression, le raccordement électrique entre le capteur de pression (12) et l'électronique de commande (13) étant réalisé au moyen de fiches de contact à ressort (36), qui s'appuient avec une tension du ressort du côté frontal sur les surfaces de contact (35, 18) opposées l'une à l'autre, associées au capteur de pression (12) et à l'électronique de commande (13),
**caractérisé en ce que**
- les fiches de contact à ressort (36) sont insérées dans des coulisses (38) formées dans une pièce isolante (37), et
- la pièce isolante (37) est fixée, de préférence par matage, dans une capsule (39) entourant le capteur de pression (12) de manière coaxiale, capsule qui de son côté est fixée au capteur de pression (12).

2. Appareil de freinage selon la revendication 1,
**caractérisé en ce que**
les fiches de contact à ressort (36) présentent une douille (41) avec un ressort de compression (43) inclus, et au moins une tige (42) déplaçable dans la douille (41), tige qui est contrainte hors de la douille (41) par le ressort de compression (43) dans le sens d'extraction.

3. Appareil de freinage selon la revendication 2,
**caractérisé en ce qu'**
une butée (44) est disposée sur au moins l'une des tiges (42) et coopère pour limiter la trajectoire de déplacement d'au moins l'une des tiges (42) avec une contre-butée (45) formée dans la douille (41).

4. Appareil de freinage selon l'une quelconque des revendications 1 à 3,
**caractérisé en ce que**
le capteur de pression (12) présente une cellule de mesure en forme de pot (19) et une bride (20) qui loge la cellule de mesure (19), dépasse dans la cellule de mesure (19) avec une saillie centrale (201) et dans un alésage (14) formé dans un bloc hydraulique (10) avec un tourillon central (202), et qui est munie d'un alésage de passage central, traversant la saillie (201) et le tourillon (202).

5. Appareil de freinage selon la revendication 4,
**caractérisé en ce que**
le tourillon central (202) porte une encoche (23) dans laquelle est incluse une bague d'étanchéité (24) se pressant sur la paroi d'alésage (141) de l'alésage (14), et la bride (20) est fixée, de préférence matée, sur le bloc hydraulique (10).

6. Appareil de freinage selon la revendication 5,
**caractérisé en ce que**
la cellule de mesure en forme de pot (19) repose avec son bord en pot sur un épaulement annulaire (203) formé sur la bride (20) et elle y est soudée.

7. Appareil de freinage selon la revendication 5 ou 6,
**caractérisé en ce qu'**
une rainure annulaire (27) coaxiale au tourillon (202) et à la saillie (201) est formée dans la bride (20), rainure dans laquelle est insérée une grille estampée (28, 29) extrudée entourant coaxialement la cellule de mesure (19).

8. Appareil de freinage selon la revendication 7,
**caractérisé en ce que**
la grille estampée (28, 29) extrudée est fixée dans la rainure annulaire (27), de préférence par emboîtement de l'un des bords de la rainure.

9. Appareil de freinage selon l'une quelconque des revendications 7 ou 8,
**caractérisé en ce qu'**
au moins une languette de fiche plate (30) est formée sur la grille estampée (28), et dépasse dans la rainure annulaire (27) en étant en contact avec les flancs et/ou le fond de la rainure annulaire (27) pour créer un contact à la masse vers la grille estampée (28).

10. Appareil de freinage selon l'une quelconque des revendications 7 à 9,
**caractérisé en ce que**
la cellule de mesure (19) est raccordée de manière électriquement conductrice à grille estampée (28) à l'aide de fils métallisés en or (31).

11. Appareil de freinage selon l'une quelconque des revendications 7 à 9,
**caractérisé en ce qu'**
un circuit imprimé équipé (32) est posé sur l'extrémité frontale de la grille estampée (28) à l'opposé de la bride (20) et est raccordé électriquement et mécaniquement à la grille estampée (28).

12. Appareil de freinage selon la revendication 11,
**caractérisé en ce que**
la grille estampée (28) porte les mandrins porte-pièce (33) s'éloignant vers le haut, qui sont fichés dans le circuit imprimé (32) par des ouvertures (34) et brasés dans les ouvertures (34).

13. Appareil de freinage selon la revendication 11 ou 12,
**caractérisé en ce que**
les surfaces de contact (35) en contact avec les fiches de contact à ressort (36), du côté du capteur de pression, sont disposées sur le côté supérieur du circuit imprimé (32) opposé au capteur de pression (12).

14. Appareil de freinage selon l'une quelconque des revendications 11 à 13,
**caractérisé en ce que**
la capsule (39) entoure coaxialement le circuit imprimé (32) et la grille estampée (28, 29) extrudée, et est fixée du côté frontal sur la bride (20), de préférence par soudage par points.

15. Appareil de freinage selon la revendication 13 ou 14,
**caractérisé en ce que**
- l'électronique de commande (13) est logée dans la boîte électronique (16) qui est disposée sur l'extrémité frontale du boîtier (15) opposée au capteur de pression (12), et présente une grille estampée (17) maintenue devant dans le boîtier (15), et
- les surfaces de contact (18) associées à l'électronique de commande (13) sont formées sur le côté inférieur (171) de la grille estampée (17) opposé à la boîte électronique (16).
